# EUROPÄISCHE PATENTSCHRIFT

(11) **EP 1 524 732 B1**
(45) Veröffentlichungstag und Bekanntmachung des Hinweises auf die Patenterteilung: **13.05.2009**
(21) Anmeldenummer: 03023458.7
(22) Anmeldetag: 18.10.2003
(51) Int. Cl.: H01R 13/622, F16B 37/08

(54) **Elektrischer Verbinder**
Electrical connector
Connecteur électrique

(43) Veröffentlichungstag der Anmeldung: 20.04.2005
(73) Patentinhaber: PHOENIX CONTACT GmbH & Co. KG, 32825 Blomberg (DE)
(72) Erfinder: Starke, Cord, 32825 Blomberg (DE); Reimchen, Valeri, 32839 Steinheim (DE); Becker, Markus, 33102 Paderborn (DE)
(74) Vertreter: Gesthuysen, von Rohr & Eggert

(56) Entgegenhaltungen:
- EP-A- 1 289 073
- DE-A- 10 233 075
- DE-A- 19 960 768
- DE-C1- 3 022 102
- US-A- 4 479 748
- US-A- 6 099 329

## Beschreibung

Die Erfindung betrifft einen elektrischen Steckverbinder mit einem Steckerteil und einem Schraubsteckerteil gemäß dem Oberbegriff des Patentanspruchs 1.

Bei derartigen Steckverbindern ist es bekannt, dass Steckerteil und Buchsenteil durch eine Überwurfmutter gegen ein ungewolltes Trennen voneinander gesichert werden. Hierzu wird üblicherweise die Überwurfmutter auf das gegenseitige Außengewinde des Steckerteils bis zu einem axialen Anschlag am Steckerteil, der häufig durch eine O-Ring-Dichtung oder einem Äquivalent axial abgedichtet ist, aufgedreht und fest angezogen, damit sich die Schraubverbindung nicht lösen kann. Nachteilig bei diesen bekannten Steckverbindern ist die benötigte Zeit für ein Befestigen oder Lösen einer derartigen Steckverbindung, wenn bei einen Schadensfall die Steckverbindung schnell gelöst und ein schadhaftes Teil ausgetauscht werde muss.

Aus der DE 100 03 924 A1 ist bekannt, dass ein Steckverbinder mittels eines Bajonett-Verschlusses lösbar mit einer Steckeraufnahme verbunden werden kann. Hierzu sind zueinander passende Kulissen an den Außenflächen der Führungshülsen und der Aufnahme des Steckverbinders angebracht, die mit korrespondierend angeordneten Führungszapfen beim Zusammenstecken und Verdrehen der Führungshülse für einen Festsitz der Verbindung sorgen. Diese Verbindungsart wird aufgrund der mechanischen Beanspruchung der Führungszapfen und der dazu passenden Kulisse zur axialen Verbindung für Steckverbinder mit kleinem Steckerbild nicht verwendet.

Aus der DE 30 22 102 C1 ist ein koaxialer HF-Steckverbinder bekannt, bei dem zumindest einer der Steckerverbinder als Gewindehülle mit einem Außengewinde ausgeführt ist und bei dem sowohl ein Schraubsteckerteil als auch ein Steckerteil mit einem Bajonettverschluss aufgedreht bzw. mittels drehender Verriegelung befestigt werden kann. Allerdings sind bei diesem Steckverbinder die bei der Handhabung auftretenden Steck- und Ziehkräfte beim Zusammenstecken und Lösen der Verbindung durch den hierbei üblichen Wegfall von Dichtungen nicht sehr groß, so dass nur gering Belastungen für die Verriegelungsnasen auftreten.

Aus der DE 296 18 581 U1 ist ein elektrischer Steckverbinder bekannt, bei dem auf ein Steckerteil das korrespondierende Buchsenteil mittels einer Überwurfmutter befestigt werden kann. Hierbei enthält die Überwurfmutter sowohl ein Innengewinde zum Anschluss auf ein Steckerteil mit ein Außengewinde als auch profilartige Aussparungen zum Anschluss auf ein Steckerteil mit Außenzapfen, beispielsweise eine Bajonettverbindung. Nachteilig ist, dass die Außenzapfen geringe Belastungen hinsichtlich der auftretenden Steck- und Ziehkräfte standhalten. Bei der Benutzung der Schraubverbindung ist eine schnelle Montage der Steckverbindung nicht möglich, da der komplette Einsteckweg mittels der Überwurfmutter verschraubt werden muss.

Aus der EP 0 431 408 A2 ist ein elektrischer Steckverbinder mit Bajonettverriegelung bekannt. Hier wird die schnelle Montage dadurch erreicht, dass eine Führungsnut für die Aufnahme einer Führungsrippe einen hohe Steigung aufweist. Die nahezu konstant hohe Steigung vermag jedoch die unterschiedlichen Anforderungen bezüglich des Festsitzes nicht zu erfüllen.

Aus der US 6,099,329 ist ein elektrischer Steckverbinder bekannt, bei dem die Gewindehülse nur aus zwei Abschnitten besteht. Da die Gewindehülse keine geschlossene zylindrische Form mehr aufweiset, ist eine derartiger Steckverbinder instabil und nicht dauerhaft zuverlässig haltbar. Steck-, Zieh- und Drehkräfte können während des Steckvorgangs leicht zu Beschädigungen der Abschnitte der Gewindehülse führen.

Für den industriellen Einsatz von Steckverbindern die an Maschinen, Sensoren und an Signale oder Spannung verteilende Elektronikgeräte vorgesehen sind werden harte Anforderungen hinsichtlich Robustheit und Dichtigkeit gestellt. Dabei haben sich Abdichtungen mittels Ringdichtungen im rauen Industrieeinsatz bewährt. Hinzu kommt, dass im Falle von Störungen an der Maschine und damit verbundenes Auswechseln ausgefallener Bauteile, Sensoren oder elektronischer Geräte deren Verbindungsleitungen zur Entnahme dieser Bauteile schnell von diesen Geräten getrennt werden müssen. Damit ist bei den derzeitig verwendeten Steckverbindern ein nicht unerheblicher Zeitaufwand damit verbunden, die jeweilige Verschraubung des Steckverbinders zu lösen.

Der vorliegenden Erfindung liegt daher die Aufgabe zugrunde, einen elektrischen Steckverbinder zur Verfügung zu stellen, der eine schnelle und sichere Verschraubung ermöglicht

Diese Aufgabe wird durch einen elektrischen Steckverbinder mit den Merkmalen des Patentanspruchs 1 gelöst, Die vorliegende Erfindung zeigt eine gegenüber dem Stand der Technik robuste Befestigungsart, die den derzeitig nicht unerheblichen Zeitaufwand minimiert und zusätzlich den Anschluss von marktüblichen Steckverbindern gewährleistet.

Die vorgeschlagene Konstruktion beschränkt sich auf eine ausschließliche Verwendung eines Schraubgewindes für diese Art von Steckverbindern, bei der durch das Aufschrauben kurz vor der axialen Fügbarkeitsgrenze eine Dichtung zusammengepresst wird, die die Kontakte vor den häufig vorhandenen rauhen Umwelteinflüssen schützen sollen.

Es wird deshalb ein elektrischen Steckverbinder mit einem eine Gewindehülse ausbildenden Steckerteil zum Aufschrauben einer Überwurfmutter oder zum Einschrauben in ein feststehendes Gehäuseteil eines elektronischen Gerätes vorgeschlagen, bei dem das Außengewinde der Gewindehülse mehrere in Steckrichtung vorgesehenen gewindefreien Bereich aufweist, in die beim Zusammenstecken ein für diese gewindefreien Bereich äquivalent dazu angepasstes Innengewinde einer Überwurfmutter bzw. eines Gehäuses nahezu vollständig eingesteckt werden kann, derart, dass sich ein Festdrehen der Verschraubung auf eine halbe bis maximal eine Umdrehung reduziert. Die Konstruktion erlaubt zusätzlich die Verwendung vollständiger Schraubgewinde und somit die Kombination mit Standard-Steckverbindern der gleichen handelsüblichen Größe und Anschlussart.

### Hierzu zeigen die Figuren

- Fig. 1: zwei Steckverbinder der gattungsmäßigen Art mit einer Gewindehülse mit Außengewinde und einer Überwurfmutter mit Innengewinde
- Fig. 2: eine Gewindehülse mit einem in Teilbereichen vorhandenen Außengewinde und gewindefreien Bereichen zwischen diesen Gewindebereichen
- Fig. 3: eine Überwurfmutter mit einem in Teilbereichen vorhandenen Innengewinde und gewindefreien Bereichen zwischen diesen InnengewindeBereichen
- Fig. 4: Eine mit einer Überwurfmutter zusammengedrehte Gewindehülse mit der Anordnung von Kontakte aufnehmenden Isolierteilen, die mittels einer O-Ring-Dichtung den Kontaktbereich flexibel abdichten
- Fig. 5: Eine Gewindehülse mit einem Außengewinde, bei dem die Gewindebereiche durch gewindefreie Bereiche derart getrennt sind, dass der gewindefreie Bereich gegenüber der Steck- und Fügerichtung schräg verläuft

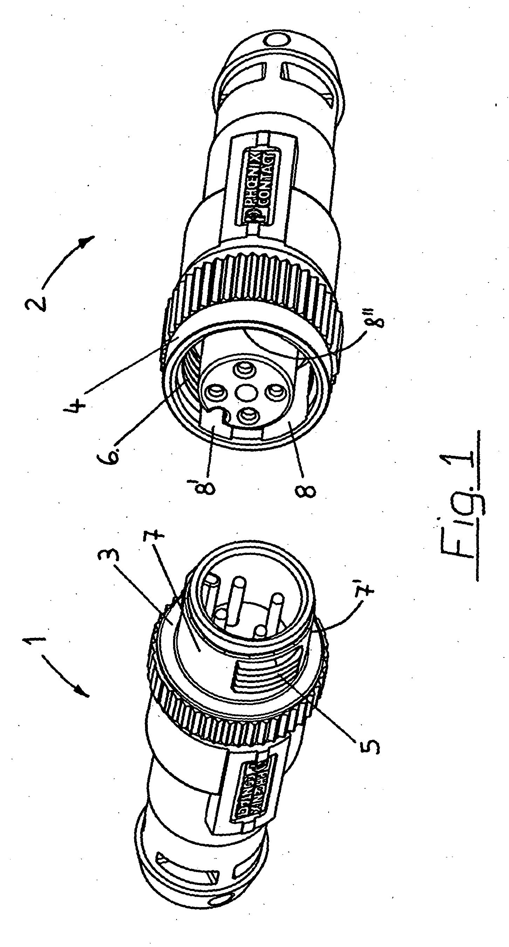

Steckverbinder 1, 2 nach Fig. 1 sind in ihrem Gesamtaufbau der Bauteile von den handelsüblichen Steckverbindern zum Beispiel für Sensoren- oder Ventilanschluss nur durch die Verwendung von neuartigen Schraubanschlüssen in Form einer Gewindehülse 3 und einer Überwurfmutter 4 zu unterscheiden. Dabei sind die Verschraubungsteile 3 und 4 in ihrer äußeren Kontur mit den handelsüblichen Steckverbindern dieser Art kompatibel. Die Kompatibilität ist auch Bedingung, damit handelsübliche Steckverbinder und die Steckverbinder 1, 2 nach Fig. 1 mit den Merkmalen für einen Schnellanschluss miteinander kombiniert werden können, ohne dass ein Nachteil entsteht.

So ist auf der Gewindehülse 3 nach Fig. 1 ein Außengewinde vorgesehen, dass jedoch nur in Teilbereichen 5 des Umfangs der Gewindehülse 3 vorhanden ist. Durch eine Positionierung dieser Gewindebereiche 5 entstehen gewindefreie Bereiche 7, 7', die einen Innengewindebereich 6 einer Überwurfmutter aufnehmen kann. Im Gegensatz dazu hat das Schraubsteckerteil 2 eine mit einem Innengewinde 6 versehene Überwurfmutter 4, die gegenüber der Fügeposition liegende gewindefreie Bereiche 8, 8', 8" und Bereiche mit einem Gewinde 6 hat.

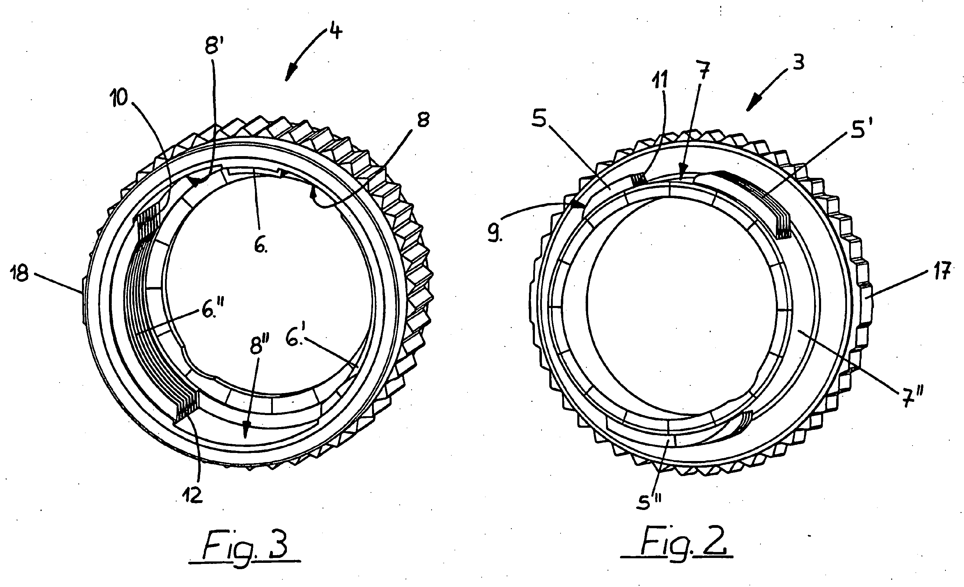

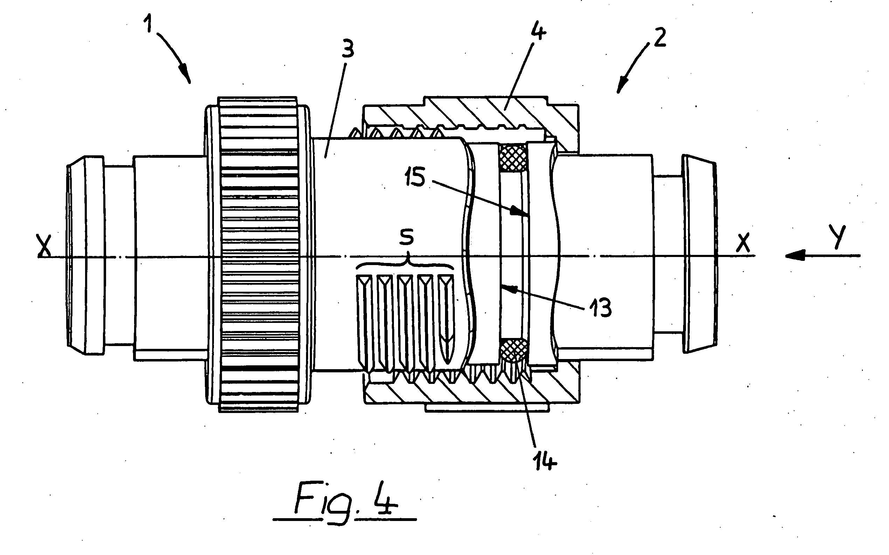

In Fig. 2 ist diese Gewindehülse 3 mit der für die Handhabung förderlichen Rändelung für ein Verdrehen der Gewindehülse 3 in einer perspektivischen Darstellung gezeigt, aus der die Bereiche mit dem Gewinde 5, 5' 5" und deren Anordnung zu entnehmen ist. Die unsymmetrische Anordnung hat den Vorteil, dass ein Fügen nur in einer Position bei einer Umdrehung möglich ist, was für die Befestigung des Steckverberbinders 1 dann von Vorteil ist, wenn eine Dichtung 14 nach Fig. 4 mit einer hohen Flexibilität Verwendung findet, so dass aufgrund der Gewindesteigung ein größerer Verdrehwinkel der Gewindehülse 3 bis nahe an einer vollständigen Umdrehung notwendig wird.

In **Fig. 3** ist äquivalent zur Gewindehülse **3** die Überwurfmutter **4** mit ihrem Innengewindefreien Bereich **8, 8', 8"** an den einem Zusammenstecken beider Teile gegenüberstehenden Bereichen ausgestattet. Somit können die radial vorstehenden Gewindebereiche **5**, **5'**, **5"** der Gewindehülse **3**, die in ihrer Ausdehnung in Umfangsrichtung den freien Bereichen der Überwurfmutter 4 angepasst sind, ineinander tauchen, bis dass die Dichtung **14** ein Ineinanderschieben in Fügerichtung X-X nach Fig. **4** begrenzt. Bei einer symmetrischen Anordnung der Gewindestücke **5**, **5'**, **5"**, **6**, **6'**, **6"** am Umfang beider Bauteile sind in dem zu fügenden jeweiligen Gegenstück gewindefreie Bereiche **7**, **7'**, **7"**, **8**, **8'**, **8"** in der gleichen Umfangsposition und deren Größe angeordnet, so dass ein größtmöglicher Überdeckungsbereich des tragenden Gewindes gegeben ist. Insbesondere ist zum leichten Finden der Fügeposition des Steckbildes durch ein Verdrehen in Umfangsrichtung an der Rändelaußenseite eine Außenmarkierung **17**, **18** angebracht, die bei Übereinstimmung der Position beider Markierungen, die vorteilig durch eine Farbmarkierung oder wie in **Fig. 2** und **Fig. 3** dargestellt als rändelfreie Fläche einen markanten optischen Punkt erzeugt, ein Ineinanderstecken von Gewindehülse **3** und Überwurfmutter **4** ermöglichen.

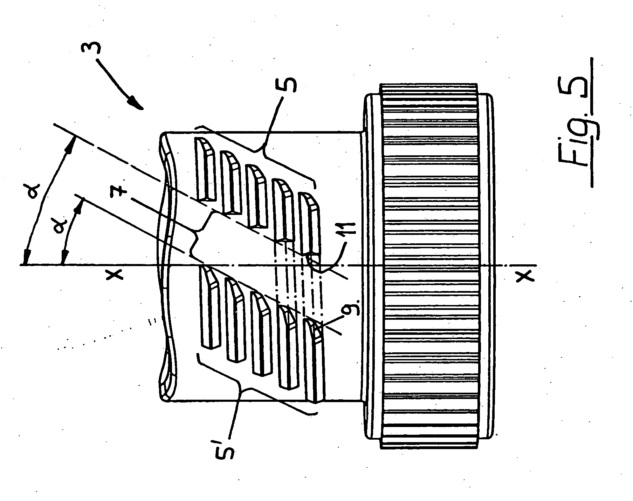

**Fig. 4** zeigt die Anordnung, bei der die Gewindehülse **3** und die Überwurfmutter **4** miteinander verschraubt sind. Dabei wird eine ringförmige Dichtung **14**, die marktüblich als O-Ring ausgeführt ist zwischen den Bauteilen und deren axial ausgerichteten Anlageflächen **13** und **15** beider Steckverbinder **1** und **2** in der Fügerichtung Y zusammengedrückt, so dass die in dem Steckverbinder isoliert positionierten Kontakte vor den teilweise widrigen Umwelteinflüssen geschützt werden.
Eine vorteilige Ausgestaltung der Ausrichtung der gewindefreien Bereiche ist in **Fig. 5** dargestellt. Die Ausrichtung des gewindefreien Bereichs auf der Oberfläche der Gewindehülse **3** und äquivalent dazu in der Überwurfmutter **4** ermöglichen bei der Handhabung bereits einen leichten Drehansatz des jeweiligen Schraubteils. Hierbei ist die Gesamtausrichtung des gewindefreien Bereichs **7**, **7'**, **7"** auf der Gewindehülse **3** oder äquivalent der gewindefreie Bereich **8**, **8'**, **8"** in der Überwurfmutter **4** in einem für beide Bauteile übereinstimmenden Winkel Alpha angeordnet, so dass die zu diesen gewindefreien Bereichen korrespondierenden Gewindebereiche **5**, **5'**, **5"**, **6**, **6'**, **6"** unter dem gleichen Winkel angeordnet sein müssen. Hierbei ist es wichtig, dass auch die Position dieser Bereiche in Umfangsrichtung korrespondierend übereinstimmen.

Es versteht sich von selbst, dass sich der Gewindegang vor und nach einem gewindefreien Bereich **7**, **7' 7"** in einer für das Gegengewinde notwendigen Flucht liegt, damit ein Aufschrauben der Überwurfmutter **4** gewährleistet ist. Somit ist auch eine Verwendung handelsüblicher Steckverbinder **1**, **2** mit Vollgewinde für beide Steckerarten zu verwenden. Bei der Kombination von Steckverbindern mit unterschiedlichem Steckbild, zum Beispiel einer symmetrischen Anordnung der gewindefreien Bereiche oder unsymmetrischen Anordnung dieser Bereiche, verhalten sich diese Steckverbinder gegenüber einem anderen Steckverbinder wie ein handelsüblicher Steckverbinder mit einem Vollgewinde, bei dem die Schraubteile in der herkömmlichen zeitaufwendigen Handhabung aneinander befestigt werden können.
In einer weiteren nicht dargestellten Ausgestaltung ist anstelle eines Schraubsteckerteils **2** mit einer Überwurfmutter **4** ein feststehendes Gehäuseteil eines Gerätes mit einem entsprechend der Überwurfmutter angepassten Aufnahmegewindeteil denkbar. Wird die Ausgestaltung des Innengewindes eines Geräteanschlusses den Bedingungen für das Innengewinde **6**, **6'**, **6"** der Überwurfmutter **4** gemäß der Erfindung angepasst, wird auch bei direktem Geräteanschluss die zeitaufwendige Handhabung der Befestigung des Steckverbinders 1 minimiert.

### Kennzeichenliste

- 1: Steckerteil mit Gewindehülse
- 2: Schraubsteckerteil mit Überwurfmutter
- 3: Gewindehülse
- 4: Überwurfmutter
- 5: Außengewinde
- 6: Innengewinde
- 7: gewindefreier Bereich an Gewindehülse
- 8: gewindefreier Bereich in der Überwurfmutter
- 9: Gewindeanschnitt in Aufschraubrichtung der Gewindehülse
- 10: Gewindeanschnitt in Aufschraubrichtung in der Überwurfmutter
- 11: scharfkantiges Gewindegang-Ende der Gewindehülse
- 12: scharfkantiges Gewindegang-Ende in der Überwurfmutter
- 13: Stirnfläche der Gewindehülse
- 14: Dichtring
- 15: axiale Anlagefläche der Überwurfmutter
- 16: schräger Verlauf des Gewindefreien Bereichs an der Gewindehülse
- 17: Außenmarkierung am Rändel der Gewindehülse
- 18: Außenmarkierung am Rändel der Überwurfmutter

## Patentansprüche

1. Elektrischer Steckverbinder, mit einem Steckerteil (1) und mit einem Schraubsteckerteil (2), wobei das Steckerteil (1) eine Gewindehülse (3) mit einem Außengewinde (5) und das Schraubsteckerteil (2) eine Überwurfmutter (4) mit einem Innengewinde (6) aufweist, und
wobei und das Schraubsteckerteil (2) durch Aufschrauben der Überwurfmutter (4) auf die Gewindehülse (3) mit dem Steckerteil (1) zusammensteckbar ist,
wobei das Außengewinde (5) der Gewindehülse (3) mehrere Gewindebereiche (5, 5', 5") und mehrere in Steck- bzw. Aufschraubrichtung vorgesehenen gewindefreien Bereiche (7, 7', 7") aufweist,
**dadurch gekennzeichnet, dass** das Innengewinde (6) der Überwurfmutter (4) eine der Anzahl der Gewindebereiche (5, 5', 5") bzw. der gewindefreien Bereiche (7, 7', 7") entsprechende Anzahl an Innengewinde-Bereichen (6, 6', 6") und an gewindefreien Bereichen (8, 8', 8") aufweist,
dass die Gewindebereiche (5, 5', 5") der Gewindehülse (3) unsymmetrisch am Umfang verteilt angeordnet sind, und
dass die gewindefreien Bereiche (7, 7', 7") der Gewindehülse (3) und die dazu angepassten Gewindebereiche (6, 6', 6") der Überwurfmutter (4) in Umfangsrichtung unterschiedlich groß ausgeführt sind und ungleichmäßig am Umfang verteilt angeordnet sind,
wobei die Überwurfmutter (4) mit ihren Innengewinde-Bereichen (6, 6', 6") in die gewindefreien Bereichen (7, 7', 7") des Außengewindes (5) einsteckbar und mit den Gewindebereiche (5, 5', 5") festdrehbar ist.

2. Elektrischer Steckverbinder nach Anspruch 1, **dadurch gekennzeichnet, dass** der gewindefreie Bereich (7, 7', 7") an der Gewindehülse (3) und die dazu angepaßten Gewinde-Bereiche (6, 6', 6") in der Überwurfmutter (4) zu ihrer axial verlaufenden Steckverbinderachse X-X unter einen für beide Steckerteile gleichen Winkel α schräg verlaufend angeordnet sind.

3. Elektrischer Steckverbinder nach Anspruch 1 oder 2, **dadurch gekennzeichnet, dass** die einzelnen Gewindegänge zu beiden Seiten eines gewindefreien Bereichs (7, 7', 7") einander gegenüber ausgerichtet sind.

4. Elektrischer Steckverbinder nach Anspruch 3, **dadurch gekennzeichnet, dass** die einzelnen Gewindegänge der Gewindehülse (3) und der Überwurfmutter (4) am Gewindeanfang des jeweiligen Gewinde-Bereichs (5, 5', 5", 6, 6', 6") Abschnitte (9) zur leichteren Einführung des Gegengewinde-Bereiches beim Festschrauben haben.

5. Elektrische Steckverbinder nach Anspruch 3 oder 4, **dadurch gekennzeichnet, dass** die einzelnen Gewindegänge der Gewindehülse (3) und der Überwurfmutter (4) am Gewinde-Ende (11) des jeweiligen Gewinde-Bereichs (5, 5', 5", 6, 6', 6") scharfkantig ausgeführt sind.

6. Elektrischer Steckverbinder nach einem der Ansprüche 1 bis 5, **dadurch gekennzeichnet, dass** das Schraubsteckerteil (2) als feststehendes Gehäuseteil eines Gerätes mit Innengewinde-Bereichen (6, 6', 6") und gewindefreien Bereichen (8, 8', 8") zum Anschluß eines Steckerteils (1) mit einem daran angepaßten Außengewinde (5) mit Gewindebereichen (5, 5', 5") ausgeführt ist.

## Claims

1. Electrical plug-type connector, with a plug part (1) and with a screw-type plug part (2), the plug part (1) having a threaded sleeve (3) with an external thread (5), and the screw-type plug part (2) having a union nut (4) with an internal thread (6), and
the screw-type plug part (2) being capable of being plugged together with the plug part (1) by the union nut (4) being screwed onto the threaded sleeve (3),
the external thread (5) of the threaded sleeve (3) having a plurality of thread regions (5, 5', 5") and a plurality of thread-free regions (7, 7', 7") provided in the plugging or screw-on direction,
**characterized in**
**that** the internal thread (6) of the union nut (4) has a number of internal thread regions (6, 6', 6") and thread-free regions (8, 8', 8") which corresponds to the number of threaded regions (5, 5', 5") and thread-free regions (7, 7', 7"), respectively,
**that** the thread regions (5, 5', 5") of the threaded sleeve (3) are arranged distributed unsymmetrically on the circumference, and
**that** the thread-free regions (7, 7', 7") of the threaded sleeve (3) and the matching thread regions (6, 6', 6") of the union nut (4) are designed to be of different sizes in the circumferential direction and are arranged distributed non-uniformly on the circumference,
the union nut (4) being capable of being plugged with its internal thread regions (6, 6', 6") into the thread-free regions (7, 7', 7") of the external thread (5) and being capable of being turned tightly with the thread regions (5, 5', 5").

2. Electrical plug-type connector according to Claim 1, **characterized in that** the thread-free region (7, 7', 7") on the threaded sleeve (3) and the matching thread regions (6, 6', 6") in the union nut (4) are arranged so as to run obliquely in relation to their axially running plug-type connector axis X-X at an angle α which is identical for both plug parts.

3. Electrical plug-type connector according to Claim 1 or 2, **characterized in that** the individual thread turns are aligned with respect to one another on both sides of a thread-free region (7, 7', 7").

4. Electrical plug-type connector according to Claim 3, **characterized in that** the individual thread turns of the threaded sleeve (3) and of the union nut (4) have sections (9) for easier insertion of the opposing thread region during tight screwing at the thread start of the respective thread region (5, 5', 5", 6, 6', 6").

5. Electrical plug-type connector according to Claim 3 or 4, **characterized in that** the individual thread turns of the thread sleeve (3) and of the union nut (4) are designed so as to have sharp edges at the thread end (11) of the respective thread region (5, 5', 5", 6, 6', 6").

6. Electrical plug-type connector according to one of Claims 1 to 5, **characterized in that** the screw-type plug part (2) is in the form of a stationary housing part of a device with internal thread regions (6, 6', 6") and thread-free regions (8, 8', 8") for connection of a plug part (1) with a matching external thread (5) with thread regions (5, 5', 5").

## Revendications

1. Connecteur électrique enfichable, comprenant une partie enfichable (1) et une partie enfichable vissable (2), la partie enfichable (1) présentant une douille filetée (3) avec un filetage externe (5) et la partie enfichable vissable (2) présentant un écrou d'accouplement (4) avec un filetage interne (6), et
la partie enfichable vissable (2) pouvant être enfichée avec la partie enfichable (1) par vissage de l'écrou d'accouplement (4) sur la douille filetée (3),
le filetage externe (5) de la douille filetée (3) présentant plusieurs régions filetées (5, 5', 5") et plusieurs régions sans filetage (7, 7', 7") prévues dans la direction d'enfichage ou de vissage,
**caractérisé en ce que**
le filetage interne (6) de l'écrou d'accouplement (4) présente un nombre de régions de filetage interne (6, 6', 6") et de régions sans filetage (8, 8', 8") qui correspond au nombre des régions filetées (5, 5', 5") et des régions sans filetage (7, 7', 7"),
**en ce que** les régions filetées (5, 5', 5") de la douille filetée (3) sont réparties de manière asymétrique sur la périphérie et
**en ce que** les régions sans filetage (7, 7', 7") de la douille filetée (3) et les régions filetées (6, 6', 6") adaptées à celles-ci, de l'écrou d'accouplement (4) sont réalisées dans la direction périphérique avec une dimension différente et sont réparties de manière irrégulière sur la périphérie,
l'écrou d'accouplement (4) pouvant être enfiché avec ses régions de filetage interne (6, 6', 6") dans les régions sans filetage (7, 7', 7") du filetage externe (5) et pouvant être serré avec les régions filetées (5, 5', 5").

2. Connecteur électrique enfichable selon la revendication 1, **caractérisé en ce que** la région sans filetage (7, 7', 7") est disposée sur la douille filetée (3) et les régions filetées (6, 6', 6") adaptées à celle-ci sont disposées en s'étendant obliquement dans l'écrou d'accouplement (4) vers son axe de connecteur enfichable X-X s'étendant axialement, suivant un angle α identique pour les deux parties enfichables.

3. Connecteur électrique enfichable selon la revendication 1 ou 2, **caractérisé en ce que** les pas de filetage individuels sont orientés vers les deux côtés d'une région sans filetage (7, 7', 7") les uns en face des autres.

4. Connecteur électrique enfichable selon la revendication 3, **caractérisé en ce que** les pas de filetage individuels de la douille filetée (3) et de l'écrou d'accouplement (4) au début du filetage de chaque région filetée (5, 5', 5", 6, 6', 6") présentent des portions (9) pour faciliter l'introduction de la région de contre-filetage lors du vissage.

5. Connecteur électrique enfichable selon la revendication 3 ou 4, **caractérisé en ce que** les pas de filetage individuels de la douille filetée (3) et de l'écrou d'accouplement (4) sont réalisés avec des arêtes vives à l'extrémité de filetage (11) de la région filetée respective (5, 5', 5", 6, 6', 6").

6. Connecteur électrique enfichable selon l'une quelconque des revendications 1 à 5, **caractérisé en ce que** la partie enfichable vissable (2) est réalisée sous forme de partie de boîtier fixe d'un appareil avec des régions de filetage interne (6, 6', 6") et des régions sans filetage (8, 8', 8") pour le raccordement d'une partie enfichable (1) à un filetage externe (5) adapté à celle-ci, avec des régions filetées (5, 5', 5").
